# FASCICULE DE BREVET EUROPEEN

(11) **EP 2 367 647 B1**
(45) Date de publication et mention de la délivrance du brevet: **01.08.2012**
(21) Numéro de dépôt: 09760742.8
(22) Date de dépôt: 19.11.2009
(51) Int. Cl.: B22D 41/56, B22D 41/50, B22D 11/106

(54) **ELEMENT DE COULEE REUTILISABLE**
WIEDERVERWENDBARES GUSSGLIED
REUSABLE CASTING MEMBER

(30) Priorité: 20.11.2008 EP 08169498
(43) Date de publication de la demande: 28.09.2011
(73) Titulaire: Vesuvius Group S.A, 7011 Ghlin (BE)
(72) Inventeur: HANSE, Eric, F-86230 Orches (FR)
(74) Mandataire: Debled, Thierry
(86) Numéro de dépôt international: PCT/EP2009/008242
(87) Numéro de publication internationale: WO 2010/057638

(56) Documents cités:
- EP-A- 0 858 851
- JP-A- 7 080 610
- KR-A- 20040 021 971
- RAMOS-BANDERAS A ET AL: "Dynamics of two-phase downwards flows in submerged entry nozzles and its influence on the two-phase flow in the mold" INTERNATIONAL JOURNAL OF MULTIPHASE FLOW, ELSEVIER, AMSTERDAM, NL, vol. 31, no. 5, 1 mai 2005 (2005-05-01), pages 643-665, XP004864645 ISSN: 0301-9322
- BINNS R ET AL: "Electromagnetic Techniques for Imaging the Cross-Section Distribution of Molten Steel Flow in the Continuous Casting Nozzle" IEEE SENSORS JOURNAL, IEEE SERVICE CENTER, NEW YORK, NY, US, vol. 5, no. 2, 1 avril 2005 (2005-04-01), pages 224-232, XP011128744 ISSN: 1530-437X
- BINNS R ET AL: "Imaging molten steel flow profiles; Imaging molten steel profiles" MEASUREMENT SCIENCE AND TECHNOLOGY, IOP, BRISTOL, GB, vol. 12, no. 8, 1 août 2001 (2001-08-01), pages 1132-1138, XP020063257 ISSN: 0957-0233
- HIGSON S -R ET AL: "Development of a sensor for visualization of steel flow in the continuous casting nozzle" REVUE DE METALLURGIE REV. METALL FRANCE, vol. 100, no. 6, juin 2003 (2003-06), pages 629-632, XP002517028 ISSN: 0035-1563

## Description

La présente invention concerne une installation de coulée de métal liquide, notamment une installation de coulée continue.

On connaît déjà dans l'état de la technique une installation de coulée pour le transfert de métal liquide, notamment d'acier liquide, une telle installation comprenant une poche de métal liquide en aval de laquelle est disposé un tube de poche cylindrique de révolution. Ce tube comprend une extrémité supérieure en contact avec un élément de coulée solidaire de la poche et une extrémité inférieure immergée dans un répartiteur. Un canal s'étendant essentiellement selon un axe, disposé verticalement lorsque le tube est introduit dans l'installation, est ménagé dans le tube.

Un procédé de coulée est réalisé de la façon suivante à l'aide de l'installation de coulée : la poche est placée au-dessus du répartiteur, puis le tube est mis en place sur celle-ci. On procède ensuite aux opérations de coulée puis on désolidarise le tube de la poche. Ensuite, on déplace la poche de sorte qu'elle laisse l'espace au-dessus du répartiteur libre. Une autre poche vient alors prendre la place de la première. Le tube de poche peut être réutilisé et, pour ce faire, solidarisé à cette autre poche. Le tube est placé selon une orientation angulaire quelconque par rapport à chaque poche.

Dans ce procédé, malgré la réutilisation du tube, la durée de vie de celui-ci est peu importante au vu des conditions extrêmes dans lesquelles il est placé (température élevée, variations importantes de température, etc.). Ainsi, un seul tube ne peut servir qu'un nombre limité de fois.

L'invention a pour but de fournir un élément de coulée, comprenant notamment un tube de poche, ayant une durée de vie plus longue.

A cet effet, l'invention a pour objet un élément de coulée pour une installation de coulée pour le transfert de métal liquide comprenant une pluralité d'éléments de coulée en contacts successifs et formant un canal pour l'écoulement du métal s'étendant essentiellement selon un axe, l'élément de coulée comprenant un tube, notamment un tube de poche, dont l'axe correspond à l'axe du canal, l'élément étant apte à former contact avec un élément amont de l'installation et comprenant des moyens pour contrôler l'orientation angulaire du tube selon son axe par rapport à l'élément amont, ces moyens étant aptes à conférer au moins trois orientations distinctes au tube.

Ainsi, on peut introduire l'élément de coulée, notamment le tube, sous la poche, selon une ou plusieurs orientations prédéterminées. De ce fait, à chaque réutilisation du tube, on peut contrôler l'orientation angulaire dans laquelle on va placer celui-ci relativement à l'élément amont de l'installation, éventuellement en fonction des orientations angulaires dans lesquelles on l'a placé lors des précédentes utilisations.

On peut alors obtenir une meilleure distribution de l'usure interne du tube. En effet, le flux issu d'une poche de coulée d'acier est légèrement orienté, d'autant plus lorsque, entre la poche et le tube de poche, se trouve une valve, dite « à tiroir » et comportant une ouverture apte à être partiellement obturée lors de la coulée. Lorsque cette ouverture est en position partiellement obturée, le flux de métal liquide a un mouvement sinusoïdal : il est dirigé plus particulièrement vers une portion donnée d'une paroi interne du tube, sur laquelle il est en quelque sorte réfléchi pour être dirigé vers une portion opposée de la paroi, etc. Or, les portions de la paroi interne du tube de poche vers lesquelles est dirigé le flux s'usent plus rapidement que le reste de cette paroi, au vu de la température élevée à laquelle est porté le métal liquide. Ainsi, en répartissant en fonction des utilisations les portions de paroi les plus susceptible d'être usées, l'usure interne de la paroi du tube est uniformisée et le tube n'est pas mis au rebut du fait d'une seule portion de la paroi interne qui serait très usée relativement aux autres (une telle configuration étant possible lorsque l'orientation du tube est aléatoire). La durée de vie du tube est donc allongée.

En outre, grâce aux moyens de contrôle de l'orientation, il est aisé d'orienter le flux de métal liquide car on sait exactement en quelle position le tube sera placé dans l'installation. On pourra donc par exemple munir le tube d'ouïes pour que le flux s'écoule selon une ou plusieurs directions privilégiées dans le répartiteur. Cela permet d'améliorer l'efficacité de la coulée.

L'invention peut également comprendre l'une ou plusieurs des caractéristiques appartenant à la liste ci-dessous :
- les moyens de contrôle sont aptes à conférer quatre orientations distinctes au tube, notamment espacées de 90°. Ce mode de réalisation est un mode de réalisation préférentiel de l'invention car il permet une durée de vie optimale du tube. En effet, de tels moyens permettent d'utiliser toute la paroi interne du tube en minimisant les portions de recouvrement, qui sont des portions susceptibles de recevoir le flux alors que l'élément de coulée est placé selon deux orientations distinctes. A contrario, si on ménage les moyens de contrôle de l'orientation de sorte qu'ils permettent d'introduire le tube dans l'installation selon un nombre d'orientations supérieur à 4 (ce mode de réalisation étant également couvert par l'invention), les portions de recouvrement seront usées pour deux orientations angulaires du tube distinctes. Ces portions de recouvrement atteindront donc un seuil critique d'usure avant le reste de la paroi interne et le tube sera mis au rebut alors qu'une grande partie de la paroi interne du tube est encore apte à recevoir le flux sans risque. Le mode de réalisation explicité ci-dessus permet donc d'optimiser la durée de vie du tube ;
- le tube présente à une extrémité correspondant à une extrémité du canal une surface formant contact avec l'élément amont, cette surface étant plane. Dans ce cas, le tube est placé contre l'installation comprenant la poche, plus particulièrement contre la valve située en aval de celle-ci, par coulissement (et non par emboîtement). L'élément de coulée selon l'invention comprend alors un avantage supplémentaire. En effet, le tube coulissant par rapport à l'élément amont, la surface de contact de celui-ci subit en général une usure localisée, la zone endommagée correspondant à la zone située au voisinage du diamètre du tube qui est parallèle à la direction de coulissement du tube relativement à l'élément amont. Ainsi, lorsqu'on change l'orientation du tube relativement à l'élément amont lors de la réutilisation de celui-ci, on répartit également l'usure de la surface en contact avec l'élément amont. Cela évite la fissuration du tube au niveau de cette surface et contribue également à une optimisation de la durée de vie de celui-ci ;
- l'élément de coulée comprend un cadre amovible apte à être placé autour du tube. Ce cadre amovible permet dans certains cas de renforcer le tube et de maintenir celui-ci en place dans l'installation de coulée par coopération du cadre avec un support ;
- les moyens de contrôle comprennent au moins une surface de butée, ménagée sur le tube et/ou le cadre et apte à coopérer avec au moins une surface complémentaire, appartenant notamment à un support apte à maintenir l'élément en contact avec l'élément amont de l'installation. En particulier, la surface de butée peut être la surface d'un logement (ou encoche) apte à coopérer avec une saillie du support ou une surface d'une saillie apte à coopérer avec un logement (ou encoche) du support ;
- les moyens de contrôle comprennent des surfaces de butée, ménagées d'une part sur le tube et d'autre part sur le cadre, et aptes à coopérer. Dans ce cas, le cadre comprend des moyens pour orienter le cadre selon une seule orientation dans le support alors que le tube peut être orienté selon plusieurs orientations dans le cadre ;
- l'extrémité du tube comprenant la surface de contact est conformée pour présenter au moins une singularité radiale, les moyens de contrôle étant agencés sur le pourtour du tube dans au moins une portion du tube formant la singularité. Cette configuration facilite la mise en place du tube sur le support ou dans le cadre pour l'opérateur ou pour un robot. En effet, à l'aide de ces singularités radiales, la correspondance entre la surface de butée du cadre et/ou celle du support et celle du tube peut être plus facilement atteinte;
- en particulier, le tube présente au moins deux singularités radiales, chaque singularité étant une protubérance se terminant selon la direction axiale du tube par une surface chanfreinée, à distance de la surface de contact. La surface chanfreinée est notamment apte à coopérer avec une surface de forme complémentaire du cadre sur laquelle elle peut s'appuyer. Dans ce cas, les moyens d'orientation angulaire sont agencés pour que la direction de coulissement du tube ne corresponde dans aucune orientation à une direction selon laquelle s'étendent la ou les singularités radiales. Ce mode de réalisation est avantageux car les zones de la surface de contact du tube subissant les contraintes sont alors les zones en compression de celle-ci. La sollicitation en compression de ces zones est effective du fait de l'appui des surfaces chanfreinées sur les surfaces complémentaires du cadre. Ce mode de réalisation permet d'éviter la formation de fissures ouvertes sur la surface de contact et d'augmenter encore la durée de vie du tube.

L'invention a également pour objet une installation de coulée pour le transfert du métal comprenant une pluralité d'éléments de coulée en contacts successifs formant un canal pour l'écoulement du métal liquide, l'installation comprenant un élément de coulée selon l'invention.

L'invention a en outre pour objet un procédé de coulée dans une pluralité d'installations de coulée pour le transfert du métal, chaque installation comprenant une pluralité d'éléments de coulée en contacts successifs formant un canal pour l'écoulement du métal, le procédé utilisant un élément de coulée selon l'invention, et comprenant les étapes suivantes :
- on introduit l'élément de coulée pour que le tube soit placé dans une première orientation selon son axe par rapport à un élément amont d'une première installation,
- on procède aux opérations de coulée,
- on retire l'élément de coulée de la première installation,
- on réitère les trois étapes précédentes en introduisant l'élément de coulée respectivement dans une deuxième puis une troisième installation pour que le tube soit placé respectivement dans une deuxième, puis une troisième orientation selon son axe par rapport à un élément amont de la deuxième et la troisième installation.

L'invention sera mieux comprise à la lecture de la description qui va suivre, donnée uniquement à titre d'exemple et faite en se référant aux dessins dans lesquels :
- la figure 1 est une vue schématique et en coupe d'une installation de coulée selon un mode de réalisation particulier de l'invention,
- la figure 2 est une vue en perspective d'un tube de poche selon un mode de réalisation particulier de l'invention,
- la figure 3 est une vue en perspective d'un élément de coulée, comprenant un tube de poche et un cadre, selon un autre mode de réalisation de l'invention,
- la figure 4 est une vue éclatée en perspective d'un élément de coulée selon la figure 3, lorsque le cadre et le tube ne sont pas encore assemblés.

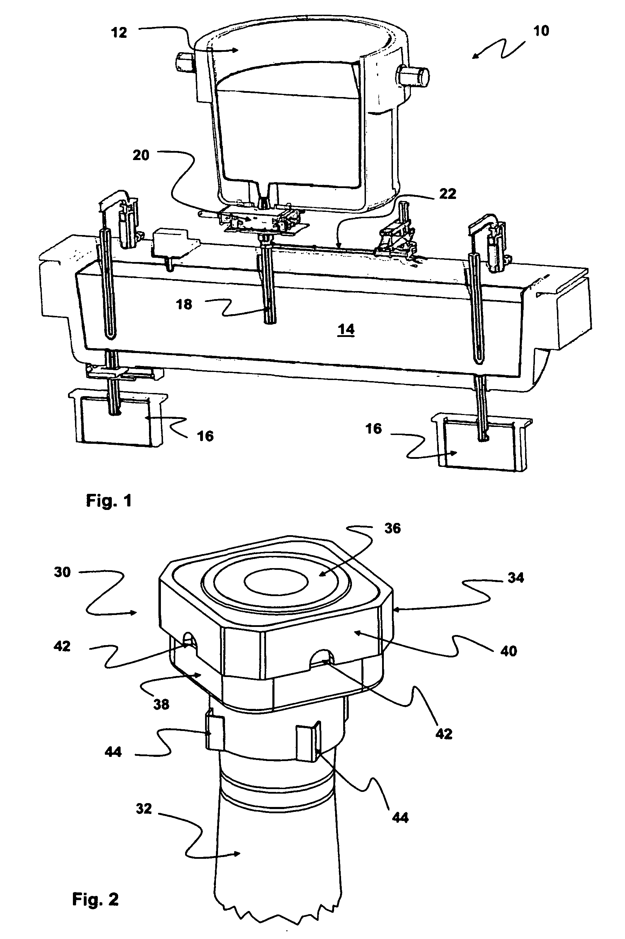

On a représenté sur la figure 1 une installation de coulée 10 selon un mode de réalisation particulier de l'invention. L'installation de coulée comprend notamment une poche 12 stockant le métal liquide et un répartiteur 14 ménageant un accès pour le métal liquide vers des moules 16 de coulée.

La poche 12 est déplaçable alors que le répartiteur 14 et les moules 16 sont fixes. Ainsi, lorsque la poche 12 est vide, elle est déplacée de façon à être éloignée du répartiteur 14 et à laisser l'espace au-dessus du répartiteur libre. Une autre poche, pleine, est alors placée à l'emplacement prévu à cet effet au-dessus du répartiteur 14.

Pour assurer le passage du métal liquide entre la poche 12 et le répartiteur 14, l'installation 10 comprend également un élément de coulée comprenant un tube de poche 18 présentant un canal pour l'écoulement du métal, ce canal s'étendant essentiellement selon un axe, vertical lorsque le tube 18 est dans sa position d'utilisation.

Comme on le voit sur la figure 1, le tube 18 comprend, lorsqu'il est dans sa position d'utilisation, une surface en contact avec l'élément amont de la coulée, ici une valve à tiroir 20 solidaire de la poche 12. Son extrémité inférieure est quant à elle immergée dans le répartiteur 14. Plus particulièrement, le tube 18 comprend à son extrémité supérieure une surface de contact avec la valve 20, cette surface étant plane et permettant au tube d'être placé par coulissement dans l'installation 10. A cet effet, le tube est supporté et maintenu durant la coulée par un bras 22 externe à l'installation.

L'installation de coulée n'est pas limitée à ce qui a été décrit ci-dessus.

On pourrait par exemple envisager qu'il existe un seul moule de coulée 16 sous le répartiteur. Le tube pourrait être également mis en place dans l'installation par emboîtement et non par coulissement. En outre, la poche n'est pas obligatoirement munie d'une valve à tiroir. Elle pourrait être munie d'une valve d'un autre type.

On peut également envisager que le dispositif permettant de maintenir le tube en contact avec la valve tiroir 20 appartienne à la poche et soit notamment formé par un support en H, maintenant le tube de façon solidaire de la poche.

On va maintenant décrire un élément de coulée selon un premier mode de réalisation de l'invention.

On a notamment représenté sur la figure 2 un élément de coulée formant tube de poche pour l'installation de coulée de la figure 1, la figure 2 montrant plus particulièrement une extrémité supérieure du tube.

Un élément de coulée 30, en l'occurrence un tube, comprend un corps de tube 32 réalisé en un matériau réfractaire et de forme cylindrique et de section transversale circulaire. Le tube comprend, à son extrémité supérieure, une tête 34 de section transversale carrée et se termine par une surface de contact plane 36, apte à entrer en contact avec un élément amont de l'installation, tel la valve à tiroir 20. Un tel tube est installé dans l'installation par coulissement comme déjà explicité plus haut.

En outre, comme on le voit sur la figure 2, le tube comprend une enveloppe 38, réalisée en une seule pièce et ménagée autour d'une portion d'extrémité du tube, cette portion comprenant notamment la tête 34 et une portion tubulaire du tube. L'enveloppe 38 est réalisée en un matériau métallique, notamment en acier.

Cette enveloppe 38 comprend une portion annulaire 40 formant une ceinture de l'enveloppe d'épaisseur plus importante que le reste de l'enveloppe. L'épaisseur de la ceinture est notamment supérieure à 10 millimètres, de préférence à 14 millimètres. En outre, des encoches 42 sont ménagées dans la ceinture 40, plus particulièrement dans la portion inférieure de celle-ci.

Le tube comprend quatre encoches 42 situées chacune sur un côté de sa tête carrée au niveau du milieu de chaque côté de la tête. Sur les figures, seules deux encoches sont représentées. Les encoches sont espacées de 90° c'est-à-dire que lorsqu'on fait subir au tube une rotation de 90° selon l'axe du canal, la tête du tube est identique à celle-ci avant rotation.

Les surfaces de deux encoches 42 situées sur des côtés opposés de la tête forment des surfaces de butée destinées à coopérer avec des surfaces complémentaires de deux pions (non représentés) d'un support de l'installation maintenant la tête, tel le bras manipulateur 22, et permettent de retenir le tube dans le support.

En outre, ces surfaces de butée forment également des moyens de contrôle de l'orientation angulaire du tube. En effet, elles permettent de placer le tube sur le support en une orientation déterminée relativement à l'axe du canal du tube.

En outre, la tête du tube étant invariante lorsqu'elle est soumise à une rotation de 90°, le tube peut être placé selon quatre orientations distinctes dans le support car un même pion du support peut recevoir les quatre encoches 42 du tube, ce qui confère au tube quatre orientations distinctes relativement à l'élément amont, soit la valve 20 de l'installation.

Ceci est particulièrement avantageux car cela permet de répartir convenablement l'usure de la paroi interne du tube, ainsi que l'usure de la surface de contact 36 de celui-ci.

L'enveloppe métallique 38 du tube comprend en outre quatre ailettes 44, dans sa portion recouvrant la portion tubulaire du tube. Elles sont identiques et s'étendent essentiellement selon l'axe du canal. Elles sont de section transversale invariante et triangulaire. Chaque ailette 44 est située sous l'une des encoches 42. Les ailettes 44 sont donc espacées de 90°.

Les ailettes 44 permettent de placer le tube 18 dans un dispositif de manipulation apte à déplacer le tube jusqu'au support. Les ailettes 44 sont notamment destinées à coopérer avec les encoches complémentaires du dispositif de manipulation. Comme le tube comprend plusieurs ailettes 44 réparties régulièrement sur une circonférence de celui-ci, il peut être placé dans le dispositif de manipulation selon plusieurs orientations relativement à l'axe du canal, ce qui permet de faciliter la mise en place du tube dans l'orientation désirée relativement au support.

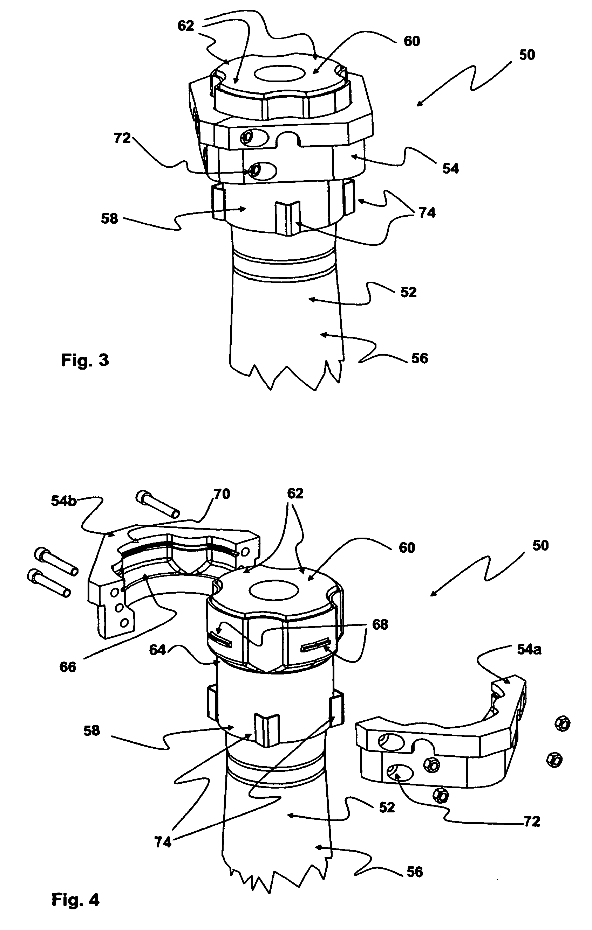

On va maintenant décrire à l'aide des figures 3 et 4 un élément de coulée selon un deuxième mode de réalisation de l'invention.

L'élément de coulée 50 selon le deuxième mode de réalisation comprend un tube 52 et un cadre amovible 54 en deux parties 54a, 54b, le cadre étant placé autour de la tête du tube. Comme pour le mode de réalisation précédent, seule l'extrémité supérieure de l'élément de coulée est représentée sur les figures.

Le tube 52 comprend un corps de tube 56 réalisé en matériau réfractaire et est muni dans une portion d'extrémité du tube d'une enveloppe 58 métallique, réalisée notamment en acier. Comme le tube selon le mode de réalisation précédent, le tube 52 se termine, à son extrémité supérieure, par une surface de contact 60, plane et destinée à former contact avec l'élément amont de l'installation, soit la valve à tiroir 20.

Le tube comprend également quatre singularités radiales constituées par les protubérances 62 et ménagées dans la portion d'extrémité du tube. Ces protubérances 62 sont espacées de 90°, c'est-à-dire qu'elles sont conformées de sorte que la section du tube est invariante lorsqu'on opère une rotation de 90° de celui-ci.

En outre, comme on le voit sur la figure 4, chaque protubérance 62 se termine à son extrémité distante de la surface de contact 60, par une surface chanfreinée 64, qui est inclinée relativement à la surface de contact 60. Chaque surface 64 est destinée à s'appuyer sur une surface 66 complémentaire appartenant au cadre, également inclinée relativement à la surface 60 du tube lorsque le cadre et le tube sont assemblés. Les surfaces 64 et 66 entrent en butée pour retenir le tube dans le cadre.

En outre, le tube 52 comprend sur son pourtour, dans chaque portion formant la singularité radiale, une saillie 68. Les saillies 68 sont destinées à s'engager dans une rainure 70 continue du cadre lorsque celui-ci et le tube sont assemblés.

Chaque partie du cadre a une paroi interne de forme complémentaire de celle du tube. Les deux parties amovibles 54a, 54b du cadre sont fixées par vissage l'une à l'autre à l'aide d'orifices 72 prévus à cet effet et d'un système vis-écrou. De ce fait, les deux parties du cadre ne sont pas fixées au tube mais sont solidaires de celui-ci du fait de leurs moyens de fixation réciproques ainsi que de la coopération des surfaces de butée 64 du tube et 66 du cadre et des saillies 68 du tube et de la rainure 70 du cadre.

En outre, du fait de la forme complémentaire du tube et du cadre et de la correspondance des saillies 68 et de la rainure 70, on peut déterminer l'orientation angulaire du tube selon l'axe du canal, relativement au cadre. En effet, le tube ne peut être mis en place que dans certaines orientations déterminées dans le cadre. Les moyens 68-70, 71-62 forment donc des moyens de contrôle de l'orientation du tube par rapport au cadre.

Le cadre est toujours mis en place de la même façon dans l'installation de coulée, à l'aide de moyens de contrôle de l'orientation du cadre par rapport à l'élément amont, non représentés sur la figure. Ces moyens comprennent par exemple deux encoches similaires aux encoches 42, situées sur deux côtés opposés du cadres et aptes à coopérer avec deux pions du support.

En outre, comme le tube est invariant lorsqu'il est soumis à une rotation de 90°, les quatre protubérances 62 étant identiques, il peut être placé selon quatre orientations espacées de 90° dans le cadre.

Ainsi, l'élément de coulée formé par l'ensemble du tube et du cadre peut être placé, en quatre orientations distinctes dans l'installation de coulée. Les moyens 62 associés à la forme complémentaire de la paroi interne du cadre 54 et 6&70 ainsi que les moyens de contrôle de l'orientation du cadre relativement au support forment des moyens de contrôle de l'orientation angulaire du tube selon l'axe du canal relativement au support et à l'élément amont de l'installation de coulée. Ces moyens sont aptes à conférer quatre orientations distinctes au tube relativement au support et à l'élément amont.

En outre, la surface 64 étant en appui sur la surface 66 du fait de la gravité terrestre, les zones situées entre les protubérances radiales 62 sont en compression lorsque l'ensemble du cadre 54 et du tube 52 est introduit dans l'installation. On agence alors les moyens de contrôle de l'orientation de sorte que les zones les plus endommagées par le coulissement, qui sont les zones situées au voisinage du diamètre du tube s'étendant dans la direction de coulissement du tube, lorsque le tube est introduit dans l'installation, correspondent aux zones situées entre les protubérances radiales. Ces zones, comme elles sont en compression, sont en effet moins endommagées par les contraintes dues au coulissement.

On remarque également que l'enveloppe métallique 58 du tube 52 comprend quatre ailettes 74 telles que les ailettes 44 décrites dans le premier mode de réalisation. Ces ailettes permettent de placer l'élément de coulée sur un dispositif de manipulation déplaçant le tube jusque dans l'installation. Dans ce mode de réalisation, les ailettes sont situées en décalé par rapport aux protubérances radiales.

Ainsi, l'ensemble du tube et du cadre formant l'élément de coulée permet également d'orienter le tube de la façon désirée dans l'installation de coulée.

L'élément de coulée n'est pas limité aux modes de réalisation décrits précédemment.

Par exemple, un élément de coulée comprenant un tube et un cadre dans lequel le tube peut être mis en place en une unique orientation relativement au cadre, le cadre étant apte à être introduit en plusieurs orientations sur le support de l'installation et relativement à l'élément amont de celle-ci, appartient également à l'invention.

En outre, la forme des moyens de contrôle n'est pas limitée à celle décrite. Le tube selon le premier mode de réalisation pourrait comprendre des surfaces de butée situées en saillie de l'enveloppe et/ou des encoches de forme différente. De même, dans le deuxième mode de réalisation, si le tube était circulaire de révolution, les moyens de contrôle pourraient comprendre des saillies 68 et un logement de forme complémentaire aménagé dans le cadre. Le nombre et la répartition de ces moyens n'est pas non plus limité à ce qui a été décrit.

En outre, des moyens de guidage tels que les ailettes 44, 74 pour placer le tube correctement sur un dispositif de manipulation sont optionnels. Ces moyens peuvent être également de forme différente de celle décrite.

De plus, le tube selon le premier mode de réalisation peut comprendre une tête de section autre que la section carrée.

De même, le tube selon le deuxième mode de réalisation peut ne comprendre aucune singularité radiale et être de forme circulaire de révolution. Dans ce mode de réalisation, le cadre peut également se fixer au tube autrement que par vissage.

En outre, la forme et le matériau des tubes ne sont pas limités à ce qui a été décrit plus haut.

On va maintenant décrire un procédé de coulée selon un mode de réalisation particulier de l'invention, effectué avec l'un ou l'autre des tubes des éléments de coulée décrits plus haut.

Tout d'abord, on amène la poche 12 au-dessus du répartiteur, la valve à tiroir 20 solidaire de celle-ci étant alors fermée. La valve à tiroir est plus particulièrement un assemblage de deux plaques superposées aptes à coulisser l'une par rapport à l'autre, ces deux plaques comprenant chacune un orifice. Lorsque la poche 12 est amenée au-dessus du répartiteur, les deux orifices ne sont pas superposés.

Ainsi, comme l'orientation du tube est déterminée par rapport au bras manipulateur, l'élément de coulée peut être placé dans une première orientation par rapport à un élément amont de l'installation, ici la valve à tiroir 20. Le bras manipulateur 22 amène ensuite l'élément de coulée 30 ; 50 contre la valve à tiroir 20 et les deux plaques de la valve à tiroir 20 sont alors déplacées de sorte que les orifices se superposent et la valve s'ouvre pour permettre le passage du flux dans le canal. On procède alors aux opérations de coulée et le métal liquide de la poche se déverse alors dans le répartiteur.

Lorsque la poche 12 est vide, le bras 22 désolidarise le tube de celle-ci et la poche est déplacée. Une nouvelle poche peut alors être mise en place au-dessus du répartiteur.

Lorsqu'il s'agit d'un élément de coulée tel que décrit dans le deuxième mode de réalisation, on démonte pendant ce temps le cadre 54 et on change le tube 52 d'orientation relativement au cadre.

Puis, dans tous les cas, on introduit l'élément de coulée 30 ;50 dans la nouvelle installation comprenant la nouvelle poche de sorte que le tube de l'élément de coulée 30 ;52 prenne une deuxième orientation différente de la première relativement à la valve à tiroir 20. Dans le cas où le tube de l'élément de coulée 30 est selon le premier mode de réalisation, on change l'orientation du tube relativement au bras 22 et, dans le cas où il est selon le deuxième mode de réalisation, on oriente le cadre 54 de la même manière relativement au bras 22.

On réitère les étapes décrites précédemment avec l'élément de coulée 30 ; 50 introduit dans l'installation de sorte que le tube de l'élément de coulée 30 ; 52 soit dans la deuxième orientation et on réitère encore les mêmes étapes en introduisant l'élément de coulée 30 ; 50 de sorte que le tube de l'élément de coulée 30 ; 52 soit selon une troisième orientation relativement à une valve d'une nouvelle installation de coulée. Ainsi, l'usure du tube est mieux répartie et on peut réutiliser celui-ci un plus grand nombre de fois. Cela allonge la durée de vie du tube et cela permet de faire des économies concernant les coûts relatifs à l'outillage nécessaire pour les procédés de coulée.

Le procédé selon l'invention n'est pas non plus limité à ce qui a été décrit ci-dessus.

Dans le cas où l'installation comprend un support appartenant à la poche pour maintenir le tube dans l'installation, le procédé peut comprendre pour chaque étape d'introduction du tube dans l'installation, une étape de prise du tube par un dispositif à l'aide des ailettes du tube puis une étape de mise en place du tube sur le support, l'orientation du tube relativement au support étant effectué à l'aide des encoches 42 du tube ou du cadre.

## Revendications

1. Elément de coulée (30 ; 50) pour une installation de coulée (10) pour le transfert de métal liquide comprenant une pluralité d'éléments de coulée (12 ; 20 ; 18) en contacts successifs et formant un canal pour l'écoulement du métal, l'élément de coulée (30 ; 50) comprenant un tube, notamment un tube de poche, dont l'axe correspond à l'axe du canal, ledit élément étant apte à former contact avec un élément amont (20) de l'installation et étant **caractérisé en ce qu'**il comprend des moyens (42 ; 64 ; 70) pour contrôler l'orientation angulaire du tube selon son axe par rapport à l'élément amont, ces moyens étant aptes à conférer au moins trois orientations distinctes au tube.

2. Elément de coulée (30 ; 50) selon la revendication précédente, dans lequel les moyens de contrôle (42 ; 64 ; 68) sont aptes à conférer quatre orientations distinctes au tube, notamment espacées de 90°.

3. Elément de coulée (30 ; 50) selon l'une quelconque des revendications précédentes, dans lequel le tube présente, à une extrémité correspondant à une extrémité du canal, une surface (36 ; 60) apte à former contact avec l'élément amont, cette surface étant plane.

4. Elément de coulée (50) selon l'une quelconque des revendications précédentes, comprenant un cadre amovible (54) apte à être placé autour du tube (52).

5. Elément de coulée (30 ; 50) selon l'une quelconque des revendications précédentes, dans lequel les moyens de contrôle comprennent au moins une surface de butée (42 ; 64 ; 68), ménagée sur le tube et/ou le cadre et apte à coopérer avec au moins une surface complémentaire (66 ; 70), appartenant par exemple à un support apte à maintenir l'élément en contact avec l'élément amont de l'installation.

6. Elément de coulée (50) selon les revendications 4 et 5 en combinaison, dans lequel les moyens de contrôle comprennent des surfaces de butée, ménagées d'une part sur le tube (52) et d'autre part sur le cadre (54), et aptes à coopérer.

7. Elément de coulée (50) selon l'une quelconque des revendications 5 et 6, dans lequel l'extrémité du tube comprenant la surface de contact (60) est conformée pour présenter au moins une singularité radiale (62), les moyens de contrôle étant agencés sur le pourtour du tube dans au moins une des portions du tube formant singularité.

8. Elément de coulée selon la revendication précédente, dans lequel le tube présente au moins deux singularités radiales, chaque singularité étant une protubérance se terminant selon la direction axiale du tube par une surface chanfreinée (64), à distance de la surface de contact (60) et apte à coopérer avec une surface complémentaire (66), appartenant notamment au cadre.

9. Installation de coulée (10) pour le transfert de métal comprenant une pluralité d'éléments de coulée (12 ; 20 ; 18) en contacts successifs formant un canal pour l'écoulement du métal liquide, **caractérisée en ce qu'**elle comprend un élément de coulée (30 ; 50) selon l'une quelconque des revendications précédentes.

10. Procédé de coulée dans une pluralité d'installations de coulée (10) pour le transfert de métal, chaque installation comprenant une pluralité d'éléments de coulée (12 ; 20 ; 18) en contacts successifs formant un canal pour l'écoulement du métal, le procédé utilisant un élément de coulée (30 ; 50) selon l'une quelconque des revendications 1 à 8, et étant **caractérisé en ce qu'**il comprend les étapes suivantes :
- on introduit l'élément de coulée (30 ; 50) dans une première installation de coulée pour que le tube soit placé dans une première orientation selon son axe par rapport à un élément amont (20) de la première installation (10),
- on procède aux opérations de coulée,
- on retire l'élément de coulée (30 ; 50) de la première installation,
- on réitère les trois étapes précédentes en plaçant l'élément de coulée (30 ; 50) respectivement dans une deuxième, puis une troisième installation pour que le tube soit placé respectivement dans une deuxième puis une troisième orientation selon son axe par rapport à un élément amont (20) de la deuxième et la troisième installation (10).

## Claims

1. Casting element (30; 50) for a casting installation (10) for transferring liquid metal comprising a plurality of casting elements (12; 20; 18) in successive contact and forming a canal along which the metal can flow, the casting element (30; 50) comprising a tube, notably a ladle shroud, the axis of which corresponds to the axis of the canal, the said element being able to make contact with an upstream element (20) of the installation and being **characterized in that** it comprises means (42; 64; 70) for controlling the angular orientation of the tube about its axis with respect to the upstream element, these means being capable of giving the tube at least three distinct orientations.

2. Casting element (30; 50) according to the preceding claim, wherein the control means (42; 64; 68) are capable of giving the tube four distinct orientations, notably spaced 90° apart.

3. Casting element (30; 50) according to either one of the preceding claims, wherein the tube, at an end correspond ng to one end of the canal, has a surface (36; 60) capable of making contact with the upstream element, this surface being planar.

4. Casting element (50) according to any one of the preceding claims, comprising a removable frame (54) that can be placed around the tube (52).

5. Casting element (30; 50) according to any one of the preceding claims, wherein the control means comprise at least one abutment surface (42; 64; 68) formed on the tube and/or the frame and capable of collaborating with at least one complementary surface (66; 70) belonging for example to a support capable of keeping the element in contact with the upstream element of the installation.

6. Casting element (50) according to claims 4 and 5 in combination, wherein the control means comprise abutment surfaces formed, on the one hand, on the tube (52) and, on the other hand, on the frame (54), and able to collaborate.

7. Casting element (50) according to either one of claims 5 and 6, wherein the end of the tube comprising the contact surface (60) is configured to have at least one radial distinctive feature (62), the control of means being arranged on the periphery of the tube in at least one of the portions of the tube that form the distinctive feature.

8. Casting element according to the preceding claim, wherein the tube has at least two radial distinctive features, each distinctive feature being a projection ending in the axial direction of the tube in a chamfered surface (64), at a distance from the contact surface (60) and capable of collaborating with a complementary surface (66) belonging notably to the frame.

9. Casting installation (10) for transferring metal comprising a plurality of casting elements (12; 20; 18) in successive contact forming a canal along which the liquid metal can flow, **characterized in that** it comprises a casting element (30; 50) according to any one of the preceding claims.

10. Method for casting in a plurality of casting installations (10) for transferring metal, each installation comprising a plurality of casting elements (12; 20; 18) in successive contact forming a canal along which the metal can flow, the method using a casting element (30) according to any one of claims 1 to 8 and being **characterized in that** it comprises the following steps:
- the casting element (30; 50) is introduced into a first casting installation so that the tube is placed in a first orientation about its axis with respect to an upstream element (20) of the first installation (10),
- the casting operations are performed,
- the casting element (30; 50) is removed from the first installation,
- the previous three steps are repeated with the casting element (30; 50) placed respectively in a second and then in a third installation so that the tube is placed respectively in a second and then in a third or entation about its axis with respect to an upstream element (20) of the second and the third installation (10).

## Patentansprüche

1. Gießelement (30; 50) für eine Gießanlage (10) zum Überführen flüssigen Metalls, die mehrere Gießelemente (12; 20; 18) umfasst, welche aufeinander folgend in Kontakt miteinander sind und einen Kanal zum Abfließen des Metalls bilden, wobei das Gießelement 30; 50) ein Rohr, insbesondere ein Behälterrohr, umfasst, dessen Achse der Achse des Kanals entspricht, wobei das Element dafür ausgelegt ist, mit einem stromaufwärts gelegenen Element (20) der Anlage in Kontakt zu treten, und **dadurch gekennzeichnet ist, dass** es Mittel (42; 64; 70) umfasst, um die Winkelausrichtung des Rohrs entsprechend seiner Achse gegenüber dem stromaufwärts gelegenen Element zu steuern, wobei diese Mittel dafür ausgelegt sind, dem Rohr mindestens drei verschiedene Ausrichtungen zu verleihen.

2. Gießelement (310; 50) nach dem vorhergehenden Anspruch, wobei die Steuermittel (42; 64; 68) dafür ausgelegt sind, dem Rohr vier verschiedene Ausrichtungen zu verleihen, die insbesondere Abstände von 90° aufweisen.

3. Gießelement (30; 50) nach einem beliebigen der vorhergehenden Ansprüche, wobei das Rohr an einem Ende, das einem Ende des Kanals entspricht, eine Fläche (36; 65) aufweist, die dafür ausgelegt ist, mit dem stromaufwärts gelegenen Element in Kontakt zu treten, wobei diese Fläche eben ist.

4. Gießelement (50) nach einem beliebigen der vorhergehenden Ansprüche, wobei es einen abnehmbaren Rahmen (54) umfasst, der dafür ausgelegt ist, um das Rohr (52) herum angeordnet zu werden.

5. Gießelement (30; 50) nach einem beliebigen der vorhergehender, Ansprüche, wobei die Steuermittel mindestens eine Anschlagfläche (42; 64; 68) umfassen, die an dem Rohr und/oder dem Rahmen vorgesehen ist und dafür ausgelegt ist, mit mindestens einer komplementären Fläche (66; 70) zusammenzuwirken, welche beispielsweise Bestandteil eines Trägers ist, der dafür ausgelegt ist, das Element mit dem stromaufwärts gelegenen Element der Anlage in Kontakt zu halten.

6. Gießelement (50) nach den kombinierten Ansprüchen 4 und 5, wobei die Steuermittel Anschlagflächen umfassen, die einerseits an dem Rohr (52) und andererseits an dem Rahmen (54) vorgesehen sind und dafür ausgelegt sind zusammenzuwirken.

7. Gießelement (50) nach einem beliebigen der Ansprüche 5 et 6, wobei das Ende des Rohres, welches die Kontaktfläche (60) umfasst, derart geformt ist, dass es mindestens eine radiale Exzentrizität (62) aufweist, wobei die Steuermittel am Umfang des Rohres in mindestens einem Abschnitt des Rohres, welcher die Exzentrizität bildet, angeordnet sind.

8. Gießelement nach dem vorhergehenden Anspruch, wobei das Rohr mindestens zwei radiale Exzentrizitäten aufweist, wobei jede Exzentrizität ein Wulst ist, der in der axialen Richtung des Rohres in einer Fase (64) endet, welche von der Kontaktfläche (60) beabstandet ist und dafür ausgelegt ist, mit einer komplementär geformten Fläche (66) zusammenzuwirken, die insbesondere Eestandteil des Rahmens ist.

9. Gießanlage (10) zum Überführen von Metall, die mehrere Gießelemente :12; 20; 18) umfasst, welche aufeinander folgend in Kontakt sind, sodass sie einen Kanal zum Abfließen des flüssigen Metalls bilden, **dadurch gekennzeichnet, dass** sie ein Gießelement (30; 50) nach einem beliebigen der vorhergehenden Ansprüche umfasst.

10. Gießverfahren in mehreren Gießanlagen (10) zum Überführen von Metall, wobei jede Gießanlage mehrere Gießelemente (12; 20; 18) umfasst, die aufeinander folgend in Kontakt sind, sodass sie einen Kanal zum Abfließen des Metalls bilden, wobei bei dem Verfahren ein Gießelement (30; 50) nach einem beliebigen der Ansprüche 1 bis 8 verwendet wird und es **dadurch gekennzeichnet ist, dass** es die folgenden Schritte umfasst:
- Einfügen des Gießelements (30; 50) in eine erste Gießanlage, um das Rohr entsprechend seiner Achse gegenüber einem stromaufwärts gelegenen Element (20) der ersten Anlage (10) in einer ersten Ausrichtung anzuordnen,
- Durchführen der Gießvorgänge,
- Entnehmen des Gießelements (30; 50) aus der ersten Anlage,
- erneutes Durchführen der vorhergehenden drei Schritte, wobei das Gießelement (30; 50) in eine zweite beziehungsweise später in eine dritte Anlage eingefügt wird, sodass das Rohr in einer zweiten beziehungsweise später einer dritten Ausrichtung entsprechend seiner Achse gegenüber einem stromaufwärts gelegenen Element (20) der zweiten sind der dritten Anlage (10) angeordnet ist.
